# FASCICULE DE BREVET EUROPEEN

(11) **EP 2 686 159 B1**
(45) Date de publication et mention de la délivrance du brevet: **17.12.2014**
(21) Numéro de dépôt: 12708552.0
(22) Date de dépôt: 15.03.2012
(51) Int. Cl.: B29C 70/38

(54) **MACHINE D'APPLICATION DE FIBRES AVEC SYSTEME DE SECURITE**
MASCHINE ZUM ANBRINGEN VON FASERN MIT SICHERHEITSSYSTEM
MACHINE FOR APPLYING FIBERS HAVING A SAFETY SYSTEM

(30) Priorité: 18.03.2011 FR 1152268
(43) Date de publication de la demande: 22.01.2014
(73) Titulaire: Coriolis Composites, 69001 Lyon (FR)
(72) Inventeur: HAMLYN, Alexander, F-56270 Ploemeur (FR)
(86) Numéro de dépôt international: PCT/EP2012/054621
(87) Numéro de publication internationale: WO 2012/126815

(56) Documents cités:
- FR-A1- 2 882 681
- FR-A1- 2 937 582
- US-A1- 2002 090 408
- US-A1- 2009 095 410

## Description

La présente invention concerne une machine d'application de fibres pour la réalisation de pièces en matériaux composites, et plus particulièrement une machine d'application de fibres avec un système de sécurité.

Il est connu des machines d'application de fibres, appelées couramment machines de placement de fibres, pour l'application sur un outillage de drapage, tel qu'un moule mâle ou femelle, d'une bande large formée de plusieurs fibres plates, de type rubans, sèches ou imprégnées de résine, notamment des fibres de carbone, constituées d'une multitude de fils ou filaments de carbone, sèches ou imprégnées d'une résine thermodurcissable ou thermoplastique.

Ces machines sont utilisées pour réaliser des préformes formées de plusieurs plis superposés, chaque pli étant formé par drapage sur le moule d'une ou plusieurs bandes jointives. Dans le cas d'un drapage de fibres pré-imprégnées de résine, la préforme, dite pré-imprégnée, est durcie ou polymérisée par passage dans un four pour obtenir une pièce en matériau composite. Dans le cas de fibres dites sèches, non pré-imprégnées de résines, comprenant éventuellement une quantité très réduite de résine dite de liaison, pour conférer un caractère collant aux fibres lors du drapage, de la résine est injectée ou infusée dans la préforme sèche avant l'étape de durcissement.

Ces machines, telles que décrites dans le document brevet WO2006/092514, comprennent classiquement une tête d'application de fibres, un système de déplacement de ladite tête d'application de fibres, des moyens de stockage de fibres, et des moyens d'acheminement des fibres pour acheminer les fibres desdits moyens de stockage vers la tête d'application.

La tête d'application de fibres, appelée également tête de placement de fibres, comprend classiquement un rouleau d'application destiné à venir en contact contre le moule pour appliquer la bande, et des moyens de guidage des fibres sur ledit rouleau d'application. La tête comprend en outre généralement un système de chauffage pour chauffer les fibres. Le rouleau de compactage presse la bande de fibres contre la surface d'application du moule, ou contre la ou les bandes de fibres précédemment déposées, afin de faciliter l'adhésion des bandes déposées entre elles, ainsi que pour évacuer progressivement l'air emprisonné entre les bandes déposées. Le système de chauffage assure un chauffage de la bande de fibres, et/ou du moule ou des bandes déjà appliquées en amont du rouleau de compactage, juste avant le compactage de la bande, afin d'au moins ramollir la résine de pré-imprégnation ou la résine de liaison, et ainsi favoriser l'adhésion des bandes entre elles.

Le système de déplacement assure le déplacement de la tête d'application selon au moins trois directions perpendiculaires les unes aux autres. Le système de déplacement peut être formé par un bras poly-articulé de type robot standard six axes, disposé au sol ou monté sur un axe linéaire, avec un poignet d'extrémité auquel est fixée la tête d'application, ou par un robot cartésien de type portique équipé d'un poignet d'extrémité portant la tête d'application.

Dans le cas de fibres conditionnées sous forme de bobines, les moyens de stockage de fibres comprennent classiquement un cantre ou armoire à bobines. Le cantre peut être disposé au sol à proximité de la tête d'application, par exemple dans le cas d'un robot standard fixe, ou peut être monté sur un élément du système de déplacement, par exemple sur un des chariots du robot cartésien ou sur un chariot suiveur coulissant sur l'axe linéaire du robot standard.

Tel que décrit dans le document brevet précité, les moyens d'acheminement sont avantageusement formés de tubes flexibles reliant les moyens de stockage à la tête d'application, chaque tube flexible étant apte à recevoir une fibre dans son passage interne. Les tubes flexibles peuvent être placés dans une gaine, tel que décrit dans le document brevet WO2010/049424. Ce brevet divulgue par ailleurs une machine d'application de fibres selon le préambule de la revendication 1.

Pour la sécurité des opérateurs, la machine est placée dans une zone dite de sécurité, définie par un système de sécurité, par exemple un système de sécurité périmétrique, tel qu'une barrière latérale grillagée entourant la machine, de sorte qu'un opérateur ne puisse être présent dans la zone de sécurité lors du fonctionnement en automatique de la machine, notamment lors du déplacement en automatique de la tête par le système de déplacement.

L'opérateur ne peut accéder à la machine en particulier à tête et/ou au cantre sans arrêter la machine pour effectuer des opérations de maintenance et/ou de vérification, ou sans passer dans un mode manuel avec vitesse limitée. Ces interruptions augmentent sensiblement le temps de réalisation des pièces, et donc l'efficacité de la machine. Dans le cas de machine de grande dimension, le temps d'accès à la machine pour l'opérateur peut être important. En outre, le système de sécurité doit avoir une dimension suffisamment grande pour intégrer l'ensemble de la machine, et représente un coût important.

Le document US2002/090408 décrit une machine d'application de fibres comprenant une tête d'application de fibres, un système de déplacement pour déplacer ladite tête d'application de fibres, des moyens de stockage de fibres, et des moyens d'acheminement des fibres pour acheminer les fibres desdits moyens de stockage vers la tête d'application. La machine comprend en outre un système de sécurité comportant au moins une barrière périmétrique définissant une zone de sécurité dans laquelle est placé le système de déplacement portant la tête d'application, les moyens de stockage étant disposés à l'extérieur de ladite zone de sécurité.

Le but de la présente invention est de proposer une machine palliant les inconvénients précités, qui soit efficace tout en garantissant de bonnes conditions de sécurité pour les opérateurs.

A cet effet, la présente invention a pour objet une machine d'application de fibres selon la revendication 1.

Selon l'invention, les moyens de stockage, de préférence formés d'un cantre ou armoire à bobines, sont disposés à l'extérieur de la zone de sécurité, la barrière périmétrique entourant le système de déplacement équipée de la tête, ainsi qu'un éventuel outil de drapage.

L'encombrement de cantres embarqués sur un des éléments du système de déplacement ou disposés à proximité de la tête d'application impose d'avoir des sur-longueurs de rail ou un espace dédié dans la zone de sécurité. Le positionnement du cantre à l'extérieur du système de sécurité, permet de réduire les dimensions du système de sécurité et/ou du système de déplacement, et ainsi de réduire sensiblement le coût de la machine.

Les moyens de stockage peuvent être placés à l'extérieur de la zone de sécurité tout en formant une partie de la barrière périmétrique. Dans le cas de moyens de stockage comprenant un cantre, une ou plusieurs parois du cantre peuvent former une partie de la barrière périmétrique, et les bobines sont accessibles depuis l'extérieur de la zone de sécurité via une porte du cantre.

Conformément à l'invention, dans le cas d'une machine équipée d'un système de chauffage mettant en oeuvre un laser, la machine comprend un système de sécurité qui constitue une enceinte de protection formant un écran au rayonnement émis par le laser. De telles enceintes sont particulièrement coûteuses, et la réduction de leur dimension permet de baisser leur coût. D'autre part, ces enceintes formant un écran au rayonnement laser étant opaques, le cantre placé en dehors de l'enceinte permet à l'opérateur de vérifier le bon fonctionnement du cantre en cours de drapage en mode automatique.

Par ailleurs, l'opérateur peut accéder librement et rapidement au cantre, pour remplacer les bobines par exemple, sans arrêter la machine ou sans passer dans un mode « manuel » avec vitesse limitée, ce qui optimise fortement le temps de réalisation des pièces. Selon un mode de réalisation, ledit système de sécurité comprend une barrière périmétrique formée d'une paroi latérale pleine, la paroi latérale étant de préférence munie de moyens d'accès à la zone de protection.

Selon un mode de réalisation, ledit système de sécurité forme une enceinte de protection comprenant ladite paroi latérale et une paroi supérieure, les fibres passant par une ouverture d'une paroi de l'enceinte. Lesdits moyens d'acheminement sont aptes à acheminer les fibres des moyens de stockage vers la tête d'application en faisant passer lesdites fibres par une ouverture d'une des parois de l'enceinte, lesdits moyens d'acheminement passant de préférence par une ouverture d'une des parois de l'enceinte.

Selon un autre mode de réalisation, qui ne fait pas partie de la présente invention, le système de protection comprend uniquement une barrière périmétrique, telle qu'une barrière physique, par exemple une barrière grillagée, ou une barrière immatériel, telle qu'une barrière optique, pour empêcher tout choc ou contact du système de déplacement ou de la tête avec un opérateur, les moyens d'acheminement peuvent passer dans une ouverture ou passage de la barrière, ou au-dessus ou en dessous de la barrière périmétrique.

Le chauffage lors de l'application de la bande est réalisé par un système de chauffage de type laser pour obtenir un chauffage précis et concentré, notamment dans le cas de résines thermoplastiques, où les fibres pré-imprégnées doivent être chauffées à des températures plus élevées, au moins jusqu'à la température de fusion de la résine, soit de l'ordre de 200 °C pour des résines de type nylon, et jusqu'à environ 400°C pour des résines de type PEEK. Selon un mode de réalisation, ladite tête d'application de fibre comprend un système de chauffage de type laser, ladite enceinte de protection formant un écran au rayonnement émis par le système de chauffage, les fibres passant par une ouverture d'une paroi de l'enceinte de manière sensiblement étanche au rayonnement lumineux, lesdits moyens d'acheminement passant de préférence par ladite ouverture de manière sensiblement étanche au rayonnement lumineux. Les moyens d'acheminement sont aptes à acheminer les fibres des moyens de stockage vers la tête d'application en faisant passer lesdites fibres par une ouverture d'une paroi de l'enceinte de manière sensiblement étanche au rayonnement lumineux. Le cantre peut être positionné à distance de l'enceinte de protection, lesdits moyens d'acheminement passant par ladite ouverture de manière sensiblement étanche au rayonnement lumineux. Le cantre peut être positionné contre ladite enceinte de protection ou à proximité immédiate de cette dernière, ou une ou plusieurs parois du cantre peuvent constituer une partie de l'enceinte de protection, l'une desdites parois du cantre comprenant alors ladite ouverture pour le passage des fibres de manière sensiblement étanche au rayonnement lumineux.

Selon un mode de réalisation, les moyens de stockage reposent de manière fixe sur le sol, lors des opérations de drapage, lesdits moyens de stockage comprenant de préférence un cantre pour recevoir des bobines de fibres, de préférence intégré dans une armoire. Selon un mode de réalisation, lesdits moyens d'acheminement des fibres comprennent des tubes flexibles, chaque tube flexible étant apte à recevoir une fibre dans son passage interne. L'étanchéité lumineuse au niveau des tubes flexibles peut être garantie par la longueur et la géométrie des tubes flexibles.

Selon un mode de réalisation, chaque tube comprend au moins un tronçon de tube s'étendant dans la zone de sécurité et connecté au niveau du système de sécurité à un système de fixation, en particulier au niveau de la paroi latérale de l'enceinte, par exemple sous la forme d'une ou plusieurs rampes, ledit système de sécurité étant de préférence équipé d'un système d'étanchéité, garantissant une étanchéité entre les passages internes desdits tronçons et l'extérieur du système de sécurité, ledit système garantissant une étanchéité lumineuse et/ou une étanchéité aux gaz.

Selon un mode de réalisation, chaque tube comprend un premier tronçon de tube s'étendant des moyens de stockage au système de sécurité et un second tronçon de tube s'étendant du système de sécurité à la tête d'application de fibre, les premiers tronçons et les seconds tronçons étant connectés au niveau dudit système de sécurité à un système de fixation, en particulier au niveau de la paroi latérale de l'enceinte, par exemple sous la forme d'une ou plusieurs rampes. De tels tronçons de tubes permettent une mise en place et un remplacement aisés des tubes.

Avantageusement, ledit système de fixation est équipé d'un système d'étanchéité, garantissant une étanchéité entre les passages internes des premiers tronçons de tube et les passages internes des seconds tronçons de tubes, ledit système garantissant une étanchéité lumineuse et/ou une étanchéité aux gaz.

Selon un autre mode de réalisation, le cantre est positionné contre ladite enceinte de protection ou à proximité immédiate de cette dernière, ou au moins une paroi du cantre constitue une partie du système de sécurité, chaque tube s'étendant du système de sécurité à la tête d'application de fibre, en un ou plusieurs tronçons, les tubes étant connectés au niveau dudit système de sécurité à un système de fixation, en particulier au niveau de la paroi latérale de l'enceinte, par exemple sous la forme d'une ou plusieurs rampes. Avantageusement, ledit système de fixation est équipé d'un système d'étanchéité, garantissant une étanchéité entre les passages internes des tubes et l'extérieur du système de sécurité.

Lorsque le cantre est positionné contre ladite enceinte de protection ou à proximité immédiate de cette dernière, le système de fixation des tubes est par exemple monté au niveau d'une ouverture de l'enceinte, les fibres sortant par une ouverture du cantre qui est disposée en vis-à-vis du système de fixation. Lorsqu'une paroi du cantre constitue une partie de l'enceinte de protection, le système de fixation est par exemple monté au niveau d'une ouverture de ladite paroi du cantre.

Selon un mode de réalisation, les moyens d'acheminement des fibres, en particulier lesdits tubes flexibles, sont placés dans le passage interne d'au moins une gaine tubulaire flexible, ladite machine comprenant en outre, avantageusement des moyens de refroidissement aptes à injecter un gaz froid dans ledit passage interne de ladite gaine dite gaine froide, pour refroidir et maintenir les fibres à une température basse, à laquelle les fibres restent peu collantes.

Avantageusement, ladite gaine est assemblée par son extrémité amont et son extrémité aval, respectivement aux moyens de stockage et à la tête d'application, respectivement par des moyens de fixation amont et aval, ladite gaine présentant une longueur et une flexibilité suffisantes pour ne pas limiter les mouvements du système de déplacement de la tête. Lesdits moyens d'injection de gaz froid sont aptes à injecter un gaz froid dans le passage interne de ladite gaine par l'extrémité amont de ladite gaine, lesdits moyens d'injection créant dans la gaine un flux de gaz froid en direction de la tête d'application, sortant par ladite extrémité aval ouverte. La machine comprend une ou plusieurs gaines froides. Selon un mode de réalisation, la machine d'application de fibres comprend une seule gaine, les tubes flexibles étant regroupés ensemble dans ladite gaine.

Avantageusement, la machine comprend un système de récupération de mou, agissant sur la partie aval de la gaine placée dans la zone de protection, de sorte qu'au moins la partie aval de la gaine reste sensiblement tendue, quelque soit la position de la tête. Selon un mode de réalisation, ledit système de récupération de mou comprend des moyens de rappel élastique reliant élastiquement un point de la gaine à un point de la machine, qui est par exemple fixe par rapport à l'embase du bras poly-articulé. Lesdits moyens de liaison comprennent par exemple au moins un enrouleur automatique de câble, par exemple un enrouleur de câble à ressort, l'un des éléments parmi l'enrouleur et l'extrémité libre de son câble étant relié audit point de la machine, l'autre élément étant fixé à la gaine.

Selon un mode de réalisation, le système de déplacement comprend un axe linéaire et un élément de déplacement portant directement ou indirectement la tête, et monté mobile en translation sur ledit axe linéaire, ladite machine comprenant une chaîne porte-câbles disposée parallèlement audit axe linéaire, dont l'extrémité mobile est assemblée audit élément de déplacement et l'extrémité fixe est assemblée en un point fixe par rapport audit axe linéaire, lesdits moyens d'acheminement, en particulier lesdits tubes flexibles de préférence placés dans une gaine, passant dans ladite chaîne porte-câbles.

Selon un mode de réalisation, le système de déplacement comprend un bras poly-articulé, par exemple du type robot six axes.

Selon un mode de réalisation, ledit bras poly-articulé repose de manière fixe par son embase dans la zone de sécurité. Selon un autre mode de réalisation, le bras poly-articulé est monté mobile par son embase, par exemple via un chariot, sur un axe linéaire reposant sur le sol.

Selon un mode de réalisation, la chaîne porte-câbles est disposée parallèlement audit axe linéaire, par exemple à côté de ce dernier, dans une goulotte de guidage, et est assemblée par son extrémité mobile à l'embase du bras poly-articulé, ledit bras poly-articulé constituant ledit élément de déplacement.

En variante, le système de déplacement est un système de déplacement de type cartésien, une chaîne porte-câbles étant prévue entre un élément de déplacement formé par un chariot, et un axe linéaire fixe formé par exemple par deux poutres horizontales surélevées d'un portique, et/ou entre deux chariots, dont l'un constitue ledit élément de déplacement et est monté mobile en translation sur l'autre chariot, qui constitue ledit axe linéaire.

Selon un mode de réalisation, la machine comprend en outre au moins un système limiteur de tension entre la tête d'application et les moyens de stockage, pour exercer un effort de traction sur les fibres, et ainsi limiter la tension d'appel des fibres au niveau de la tête d'application, les tubes flexibles comprenant alors des premiers tronçons fixés en extrémité directement ou indirectement aux moyens de stockage et au système limiteur, respectivement par des premiers moyens de fixation communs amont et aval, et des seconds tronçons fixés en extrémité au système limiteur et à la tête d'application de fibres respectivement par des seconds systèmes de fixation communs amont et aval.

Selon un mode de réalisation, dans le cas d'un bras poly-articulé monté mobile sur un rail par son embase, de préférence via un chariot, ledit système limiteur de tension est monté fixe sur l'embase ou son chariot. Un système limiteur de tension peut être prévu en sortie de cantre à l'extérieur du système de protection.

Selon un mode de réalisation, les moyens de stockage comprennent au moins un cantre pour recevoir des bobines de fibres, ladite machine comprenant un système de jonction, appelé également système de raboutage, apte à effectuer la jonction, par exemple par collage, et/ou épissure et/ou nouage, de manière semi-automatique ou automatique, de l'extrémité de fin d'une première bobine de fibre et l'extrémité de début d'une deuxième bobine de fibre. Le cantre peut par exemple stocker sur des mandrins deux fois plus de bobines que le nombre de fibres drapées par la tête. En cours de drapage, l'opérateur peut venir charger aisément, dans des conditions ergonomiques, une nouvelle bobine sur un mandrin du cantre, et placer l'extrémité de début de la fibre de cette nouvelle bobine dans le système de jonction, ce dernier réalisant automatiquement la jonction avec l'extrémité de fin d'une fibre.

La présente demande divulgue également une machine d'application de fibres, avec ou sans le système de sécurité précité, comprenant
- une tête d'application de fibres comprenant de préférence un rouleau d'application et des moyens de guidage des fibres sur ledit rouleau d'application,
- un système de déplacement pour déplacer ladite tête d'application de fibres,
- des moyens de stockage de fibres, et
- des moyens d'acheminement des fibres pour acheminer les fibres desdits moyens de stockage vers la tête d'application,

le système de déplacement comprenant un axe linéaire et un élément de déplacement portant directement ou indirectement la tête, et monté mobile en translation sur ledit axe linéaire, ladite machine comprenant une chaîne porte-câbles disposée parallèlement audit axe linéaire, dont l'extrémité mobile est assemblée audit élément de déplacement et l'extrémité fixe est assemblée en un point fixe par rapport audit axe linéaire, lesdits moyens d'acheminement passant dans ladite chaîne porte-câbles.

L'utilisation d'une telle chaîne porte-câbles permet de placer les moyens de stockage, de préférence formés d'un cantre ou armoire à bobines, à distance de la tête d'application, tout en proposant un système de déplacement qui permet la réalisation de grandes pièces en matériau composite, et tout en garantissant un bon acheminement des fibres. L'opérateur peut ainsi accéder facilement au cantre en cours de drapage.

Selon un mode de réalisation, lesdits moyens d'acheminement des fibres comprennent des tubes flexibles, chaque tube flexible étant apte à recevoir une fibre dans son passage interne, lesdits tubes flexibles, de préférence placés dans le passage interne d'au moins une gaine tubulaire flexible, passant dans ladite chaîne porte-câbles.

Selon un mode de réalisation, le système de déplacement comprend un bras poly-articulé, par exemple du type robot six axes, monté mobile par son embase, par exemple via un chariot, sur l'axe linéaire reposant par exemple sur le sol. La chaîne porte-câbles est disposée parallèlement audit axe linéaire, par exemple à côté de ce dernier, dans une goulotte de guidage, et est assemblée par son extrémité mobile à l'embase du bras poly-articulé, ledit bras poly-articulé constituant ledit élément de déplacement.

Selon un autre mode de réalisation, le système de déplacement est un système de déplacement de type cartésien, une chaîne porte-câbles étant prévue entre un élément de déplacement formé par un chariot, et un axe linéaire fixe formé par exemple par deux poutres horizontales surélevées d'un portique, et/ou entre deux chariots, dont l'un constitue ledit élément de déplacement et est monté mobile en translation sur l'autre chariot, qui constitue ledit axe linéaire.

L'invention sera mieux comprise, et d'autres buts, détails, caractéristiques et avantages apparaîtront plus clairement au cours de la description explicative détaillée qui va suivre, en référence aux dessins schématiques annexés sur lesquels :
- la figure 1 est une vue schématique en perspective d'une machine de placement selon un premier mode de réalisation de l'invention, dans laquelle le système de déplacement comprend un bras poly-articulé de type robot standard six axes disposé au sol ;
- la figure 2 est une vue en coupe selon le plan de coupe II-II de la figure 1 ;
- la figure 3 est une vue schématique partielle en perspective d'un système de fixation de tubes flexibles au niveau d'une paroi de l'enceinte avec un système d'étanchéité selon un premier mode de réalisation ;
- la figure 4 est une vue analogue de celle de la figure 3, le système de fixation de tubes flexibles étant équipé d'un système d'étanchéité selon un second mode de réalisation ;
- la figure 5 est une vue schématique en perspective d'une machine de placement selon un deuxième mode de réalisation de l'invention, dans laquelle le système de déplacement comprend un bras poly-articulé de type robot standard six axes monté sur axe linéaire ;
- la figure 6 est une vue schématique de dessus de la machine de la figure 5, en l'absence du plafond de l'enceinte ;
- la figure 7 est une vue schématique en coupe longitudinale selon le plan de coupe VII-VII de la figure 6 ;
- la figure 8 est une vue schématique en coupe transversale selon le plan de coupe VIII-VIII de la figure 7 ; et,
- la figure 9 est une vue agrandie du détail D de la figure 8.

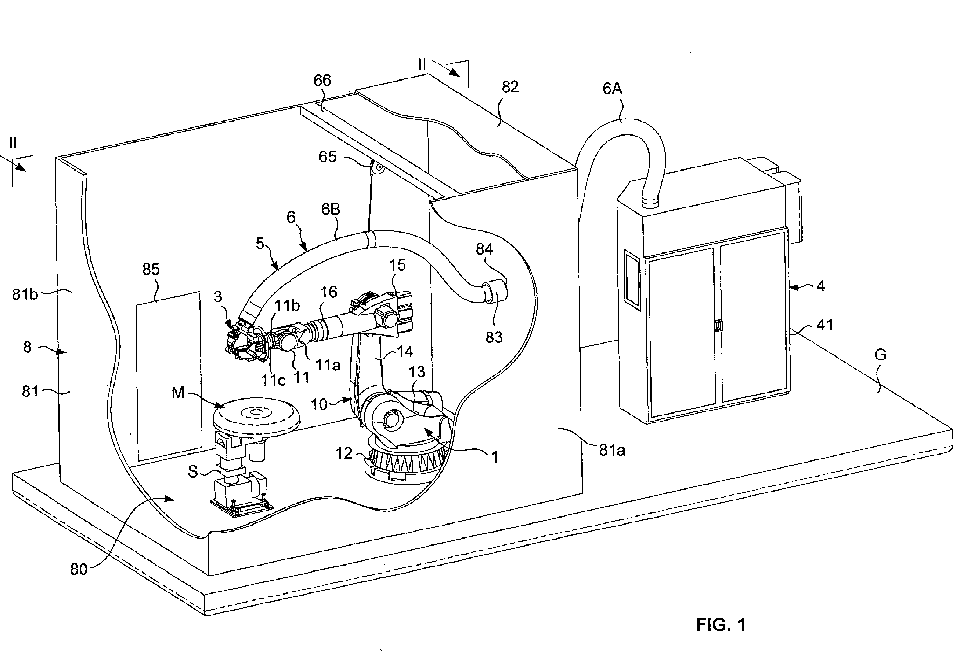

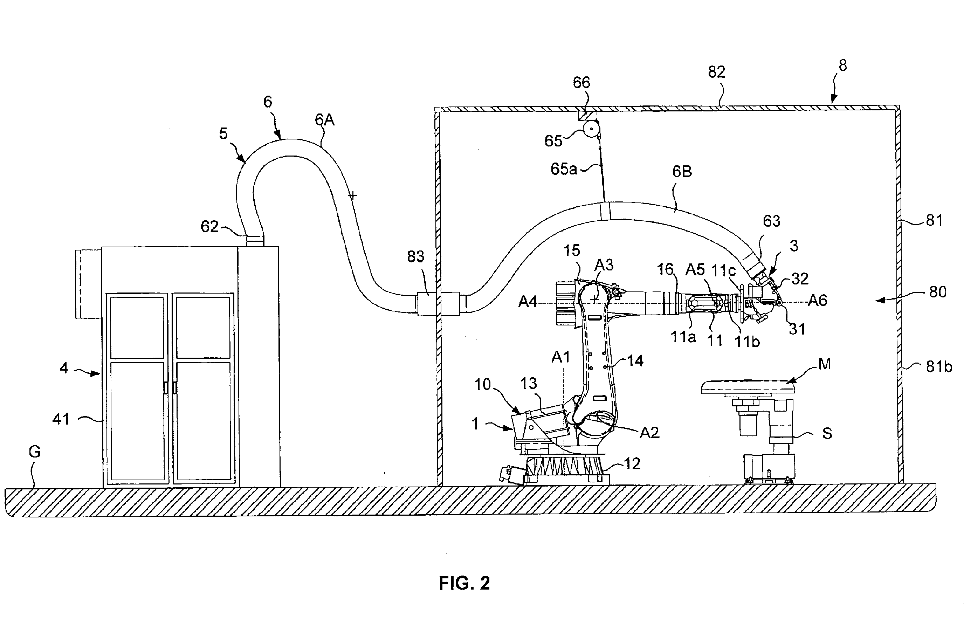

Les figures 1 et 2 illustrent un premier mode de réalisation de l'invention dans laquelle la machine de placement comprend un système de déplacement 1 formé d'un bras poly-articulé 10, du type robot six axes, connu en soi, disposé au sol G, une tête 3 d'application de fibres montée sur le poignet d'extrémité 11 du bras poly-articulé, des moyens de stockage 4 pour stocker les fibres, des moyens d'acheminement 5 pour acheminer des fibres depuis lesdits moyens de stockage vers la tête d'application, et une enceinte 8 de protection.

Le bras poly-articulé 10 comprend, de manière connu en soi, un premier tronçon ou embase 12 et un deuxième, troisième, quatrième et cinquième tronçons, respectivement 13, 14, 15 et 16, assemblés pivotant les uns aux autres autour d'axes de rotation A1, A2, A3 et A4, et un poignet d'extrémité 11 comprenant les trois derniers tronçons 11a, 11b, 11c du bras. Le poignet d'extrémité comprend un premier tronçon 11a par lequel le poignet est assemblé sur le sixième tronçon 16 du bras, de sorte que le poignet soit monté rotatif autour de l'axe A4, un deuxième tronçon 11b monté pivotant sur le premier tronçon autour d'un axe A5, et un troisième tronçon 11c monté pivotant sur le deuxième tronçon autour d'un axe A6, ce troisième tronçon, ou platine d'assemblage, étant destiné à porter la tête. Le bras poly-articulé 10 est fixé au sol G par son embase 12.

La tête 3 d'application de fibres, appelée également tête de placement de fibres, comprend de manière connue, une structure support sur laquelle sont montés un rouleau d'application 31 apte à venir en contact avec la surface d'application d'un moule M pour appliquer une bande formée de plusieurs fibres, éventuellement pré-imprégnées de résine, et un système de guidage permettant de guider les fibres vers le rouleau, par exemple en deux nappes de fibres. Afin de pouvoir à tout moment stopper et reprendre l'application d'une bande, ainsi que choisir la largeur de la bande, la tête comprend en outre des systèmes de coupe et de blocage pour couper et bloquer individuellement chaque fibre en amont du rouleau, et des systèmes de réacheminement en amont des systèmes de coupe pour réacheminer individuellement chaque fibre venant d'être coupée. La tête comprend en outre un système de chauffage 32, monté sur la structure support en amont du rouleau par rapport à la direction d'avancement de la tête d'application lors de l'application de la bande de fibres sur la surface d'application du moule. Le système de chauffage est un système de chauffage de type laser, dont le rayonnement est dirigé en direction de la bande, juste avant son compactage, ainsi que vers la ou les bandes déjà déposées. Le rayonnement est ainsi dirigé obliquement vers le rouleau pour chauffer une section de bande disposée sur le rouleau, avant son compactage par ce dernier. Le système de chauffage de type laser peut comprendre des diodes laser, disposées en une ou plusieurs rangées, émettant un rayonnement de longueur d'onde comprise entre 880 à 1030 nm par exemple, un laser à fibre optique ou un laser YAG émettant à une longueur d'onde de l'ordre de 1060 nm.

La machine est prévue pour l'application de fibres, par exemple de type fibres de carbone, conditionnées sous forme de bobines. Les moyens de stockage 4 sont formés d'un cantre 41 pour recevoir les bobines de fibres. Le cantre comprend un cadre support portant une pluralité de mandrins sur lesquels sont montées les bobines. Le cantre est intégré dans une armoire qui sera avantageusement régulée en hygrométrie et en température.

Les moyens d'acheminement 5 comprennent des tubes flexibles tels que décrits dans le document brevet WO2010/049424 précité. Les fibres sont acheminées individuellement du cantre 41 à la tête dans les tubes flexibles fixés en extrémités au cantre et à la tête respectivement par des systèmes de fixation amont et aval, par exemple sous forme de rampes. Ces tubes flexibles par exemple de section rectangulaire, et en matériau plastique, tel qu'un polyéthylène haute densité antistatique présentent une longueur et une flexibilité suffisantes pour ne pas limiter le système 1 de déplacement dans ses mouvements. Tel que décrit dans le document brevet FR 2 882 681, chaque tube peut être équipé d'une lame flexible longitudinale, limitant ou interdisant la flexion transversale du tube dans le plan de la lame, ce qui permet de supprimer, ou tout au moins limiter, les risques de retournement de la fibre disposée dans le passage interne du tube flexible parallèlement à la lame. Par ailleurs, des moyens de fluidisation peuvent être prévus pour fluidiser une fibre lors de son transport dans le passage interne d'un tube flexible. Ces moyens de fluidisation comprennent des moyens pour injecter de l'air comprimé dans le passage interne de chaque tube flexible afin de créer un flux d'air dans la direction de transport des fibres, et éventuellement des moyens de vibration aptes à faire vibrer lesdits tubes flexibles.

Les tubes sont placés dans le passage interne d'une gaine 6 flexible fixée par son extrémité amont 62 ouverte aux moyens de stockage et par son extrémité aval 63 ouverte à la tête. La gaine est formée d'une enveloppe tubulaire, par exemple de section transversale sensiblement circulaire, constituée d'une toile en matériau thermoplastique étanche, par exemple en polyuréthane, renforcée d'une armature métallique, l'armature métallique étant par exemple constituée d'un fil métallique hélicoïdal s'étendant de l'extrémité amont à l'extrémité aval de la gaine. En variante, la gaine est une gaine flexible annelée robotique, en polyuréthane ou en polyamide. La gaine est refroidie par des moyens de refroidissement, placés dans l'armoire du cantre, aptes à injecter un gaz froid dans ledit passage interne de ladite gaine. La gaine présente une longueur et une flexibilité suffisantes pour ne pas limiter les mouvements du bras poly-articulé.

Selon l'invention, la machine comprend une enceinte 8 de protection comprenant une paroi latérale 81 s'étendant verticalement depuis le sol G, et une paroi supérieure 82 horizontale formant un plafond. Dans le mode de réalisation illustré, l'enceinte est de forme générale parallélépipédique, la paroi latérale 81 comprenant deux parties longitudinales 81a parallèles opposées reliées entre elles par deux parties transversales 81b parallèles opposées. Les parois 81, 82 sont par exemple formées d'une armature métallique sur laquelle sont montés des panneaux opaques, par exemple des panneaux de bois ou de particules de bois, notamment des panneaux mélaminés, ou des panneaux métalliques, notamment des panneaux isolants, par exemple chacun formé de deux plaques d'acier, de préférence peintes, entre lesquelles est placé un matériau isolant tel que de la mousse polyuréthane. En variante, la paroi latérale s'étend jusqu'au plafond du bâtiment dans lequel est placée la machine, le plafond de l'enceinte étant formé par le plafond du bâtiment. Par ailleurs, la machine peut être placée à proximité d'un mur du bâtiment dans lequel est placée la machine, la paroi latérale de l'enceinte étant formée en partie par une portion dudit mur du bâtiment.

L'enceinte définit une zone de protection 80 dans laquelle sont placés le bras poly-articulé 10 portant la tête 3, et le moule M à draper. Les parois de l'enceinte forment un écran au rayonnement émis par le système de chauffage laser de la tête. La paroi latérale est équipée d'une porte 85 permettant d'accéder à la zone de protection pour la mise en place et le retrait des moules, et pour effectuer des opérations sur la tête. Le cantre 41 est disposé à l'extérieur de l'enceinte, à proximité de cette dernière. La gaine 6 dans laquelle sont placés les tubes flexibles passe à travers la paroi 81 latérale en passant dans une ouverture 84 de celle-ci, par exemple sensiblement à mi-hauteur de la paroi latérale. La gaine passe par exemple dans un manchon 83 cylindrique traversant de manière étanche la paroi, la gaine passant de manière étanche dans ledit manchon. La gaine présente ainsi une partie 6A amont à l'extérieur de l'enceinte et une partie aval 6B disposée dans l'enceinte. L'étanchéité lumineuse au niveau des tubes flexibles peut être garantie par la longueur et la géométrie des tubes flexibles.

Pour éviter que la gaine ne gêne les déplacements de la tête et/ou ne vienne contre le moule, la machine comprend un système de récupération de mou, appelé également système de mise sous tension, agissant sur ladite gaine de sorte que la partie aval 6B de la gaine reste tendue, en particulier au niveau du poignet. Ledit système de récupération de mou comprend un enrouleur 65 de câble automatique, par exemple de type à ressort spiral, monté sur une traverse 66 support fixée en partie supérieure de l'enceinte, et dont l'extrémité libre du câble 65a est fixée à la gaine.

En variante, la partie 6A amont de la gaine est formée par un premier tronçon amont de gaine fixé par une première extrémité au cantre et par une deuxième extrémité audit manchon 83 traversant la paroi latérale. La partie aval 6B de la gaine est formée d'un deuxième tronçon de gaine fixé par une première extrémité audit manchon, du côté intérieur de l'enceinte, et par une deuxième extrémité à la tête.

Chaque tube flexible est formé d'un seul tronçon d'étendant du cantre à la tête. En variante, les fibres passent dans des premiers tronçons de tube flexible, dits premiers tubes, fixés par leurs extrémités au cantre et à un système de fixation monté sur la paroi de l'enceinte, par exemple dans le manchon, et dans des seconds tronçons de tube flexible, dits seconds tubes fixés par leurs extrémités audit système de fixation de la paroi latérale et à la tête de placement. Ce système de fixation est formé d'une ou plusieurs rampes, par exemple de deux rampes superposées, une pour chaque nappe de fibres.

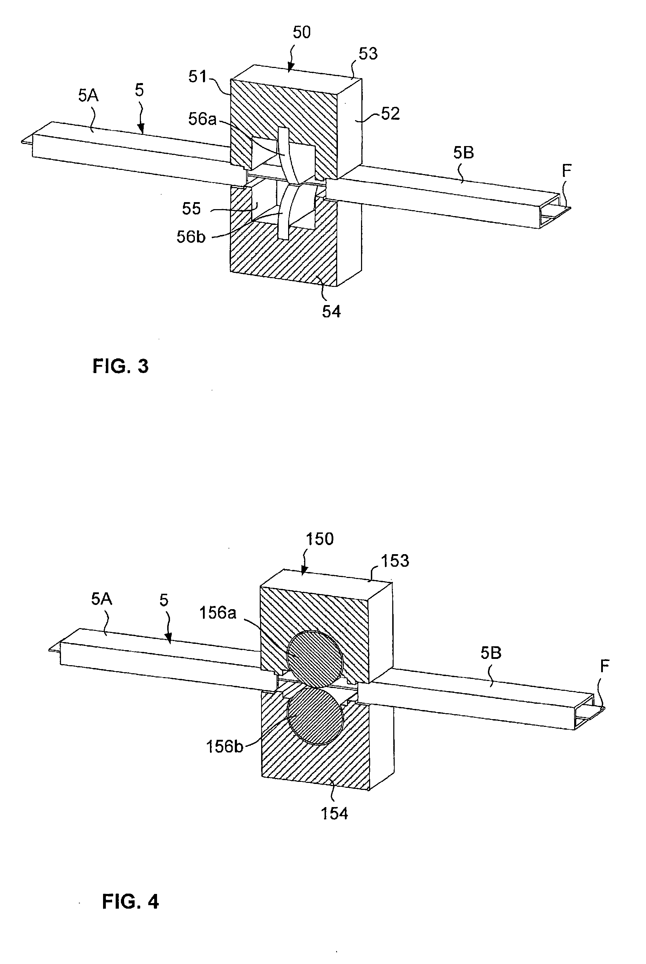

La figure 4 illustre une vue en perspective partielle d'une rampe de ce système de fixation de la paroi latérale de l'enceinte. Chaque premier tube 5A, de section rectangulaire, est fixé par une extrémité dans une fente de la face avant 51 de la rampe 50, un second tube 5B de section rectangulaire étant fixé par une extrémité dans une fente de la face arrière 52 de la rampe, en vis-à-vis d'un premier tube. La rampe 50 est formée de deux plaques, appelées plaque supérieure 53 et plaque inférieure 54, assemblées l'une à l'autre pour coincer entre elles les premiers tubes 5A et les second tubes 5B sensiblement bord à bord, en une rangée de chaque côté.

En fonction de la longueur des premiers et seconds tubes, et afin de garantir une parfaite étanchéité lumineuse au niveau de l'acheminement des fibres, la paroi est avantageusement équipée d'un système d'étanchéité. En référence à la figure 4, ce système d'étanchéité est monté dans un logement 55 longitudinal de la rampe, formé dans les deux plaques 53, 54, entre les premiers tubes et les seconds tubes. Pour chaque fibre F, le système d'étanchéité est formé d'une paire de brosses 56a, 56b entre lesquelles passent la fibre, de sorte que tout éventuel rayon lumineux provenant du second tube 5B soit stoppé par les brosses. Une brosse 56a supérieure est montée sur la plaque 53 supérieure et une brosse inférieure 56b est montée sur la plaque 54 inférieure. Chaque brosse est formée d'une languette unique ou de plusieurs fils. Une brosse supérieure et une brosse inférieure sont prévues pour chaque fibre. En variante, la rampe est équipée d'une brosse supérieure et d'une brosse inférieure pour l'ensemble des fibres de la rampe.

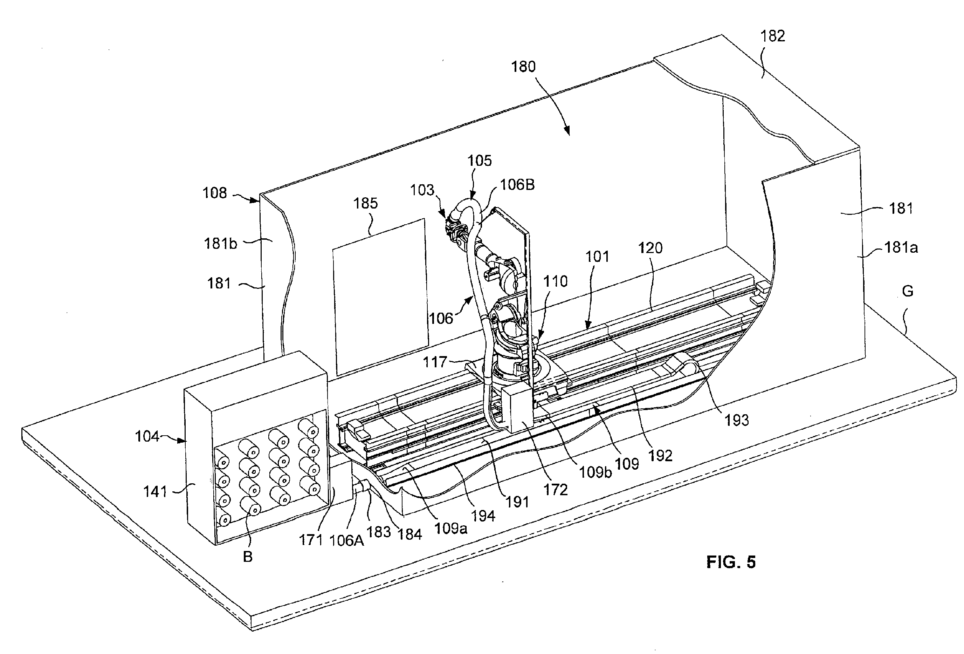

La figure 5 illustre une variante de réalisation dans laquelle le système d'étanchéité est formé de deux rouleaux 156a, 156b entre lesquels passent les fibres F. Un rouleau 156a supérieur est monté de manière rotative sur la plaque 153 supérieure de la rampe 150 et un rouleau 156b inférieur est monté sur la plaque inférieure 154 de la rampe.

La machine comprend une unité de commande (non représentée) placée à l'extérieur de l'enceinte, comprenant une interface homme-machine pour commander les déplacements du robot selon des séquences programmées, la tête de placement de fibres, notamment les vérins de systèmes de coupe individuelle et de systèmes de réacheminement. Les câbles électriques et conduits pneumatiques et/ou hydrauliques pour l'alimentation et la commande de la tête de placement sont disposés dans un ou plusieurs tuyaux (non représenté) s'étendant de la tête de placement, le long du bras du robot jusqu'à l'unité de commande, en traversant de manière sensiblement étanche la paroi latérale. Ces tuyaux passent par exemple par une ouverture (non représentée) disposée en partie basse de la paroi latérale.

La machine comprend avantageusement un support S disposé à l'intérieur de l'enceinte pour le support d'un moule M, ce support permettant éventuellement un déplacement en translation du moule dans une ou plusieurs directions et/ou un déplacement en rotation autour d'un ou plusieurs axes de rotation.

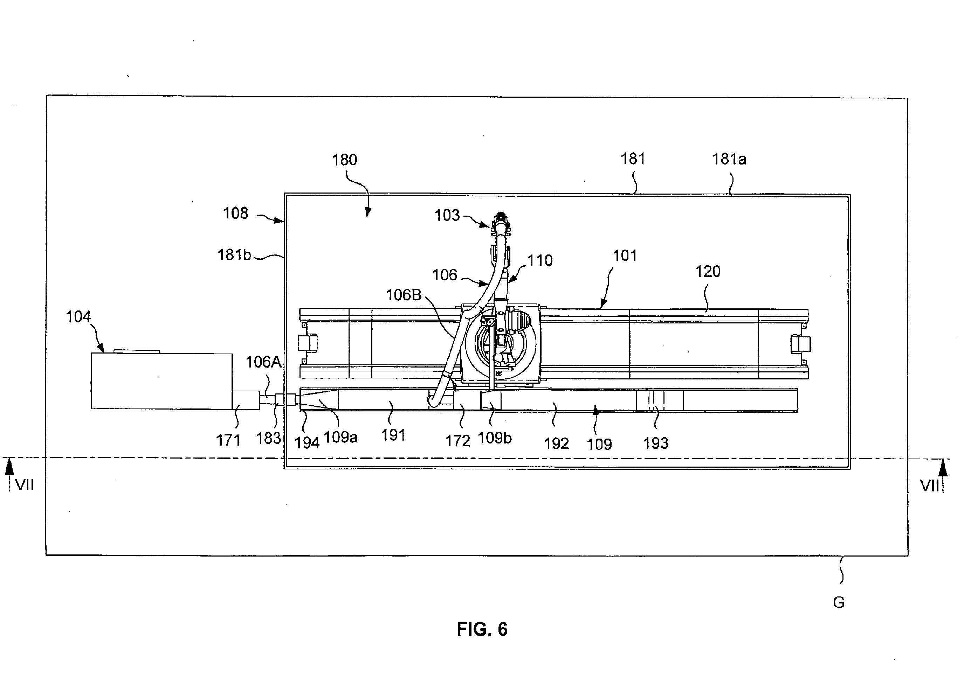

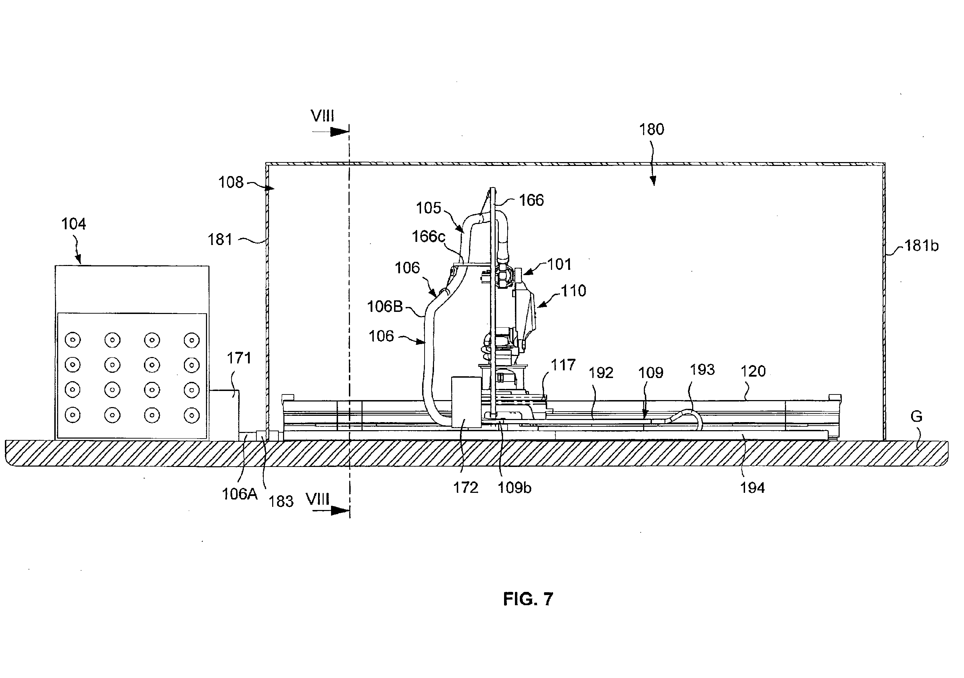

Les figures 5 à 9 illustrent un second mode de réalisation de l'invention dans lequel la machine de placement comprend un système de déplacement 101 formé d'un bras poly-articulé 110, du type robot six axes, tel que décrit précédemment, monté mobile sur un axe linéaire 120. Comme décrit précédemment, la tête 103 de placement de fibres comprend notamment un rouleau d'application, un système de guidage et un système de chauffage de type laser, et est montée sur le poignet d'extrémité 111 du bras poly-articulé. Le bras poly-articulé 110 est fixé par son embase 112 sur un chariot 117 monté coulissant sur l'axe linéaire 120, ledit axe linéaire étant constitué de deux rails 121 parallèles fixés au sol G. Le chariot est équipé de moyens d'entraînement, par exemple de type galets motorisés, asservis par une unité de commande pour le déplacement de la tête le long de ces rails. Les moyens de stockage 104 sont formés d'un cantre 141 pour recevoir les bobines de fibres. Le cantre comprend un cadre support portant une pluralité de mandrins sur lesquels sont montées les bobines B. Le cantre est intégré dans une armoire avantageusement régulée en hygrométrie et en température. Les moyens d'acheminement 105 comprennent des tubes flexibles fixés en extrémités au cantre et à la tête. Les tubes sont placés dans le passage interne d'une gaine 106 fixée en extrémité au cantre et à la tête, et refroidie par des moyens de refroidissement, placés dans l'armoire du cantre.

La machine comprend une enceinte 108 de protection formant un écran au rayon laser, comprenant une paroi latérale 181 s'étendant verticalement depuis le sol G, et une paroi supérieure 182 horizontale formant un plafond. La paroi latérale 181 comprend deux parties longitudinales 181a, dont l'une est équipée d'une porte 185 et deux parties transversales 181b. L'enceinte entoure le bras poly-articulé portant la tête103, ainsi que l'axe linéaire 120 sur lequel est monté le bras poly-articulé.

Le cantre 141 est disposé à l'extérieur de la zone de protection 180 définie par l'enceinte 108, à proximité de cette dernière. La gaine 106 dans laquelle sont placés les tubes flexibles passe par une ouverture 184 de la paroi latérale 181, disposée en partie inférieure de celle-ci et équipée d'un manchon 183.

Un ou plusieurs systèmes limiteur de tension, tel que décrit en détails dans le document brevet WO2006/092514 précité, comprenant un ensemble de cylindres parallèles motorisés sur lesquels les fibres passent sans en faire le tour, peuvent être prévus entre le cantre et la tête d'application pour réduire la tension des fibres au niveau du rouleau. Dans ce mode de réalisation, un premier système limiteur de tension 171 est intégré dans l'armoire du cantre, ou disposé en sortie de l'armoire, en partie inférieure de l'armoire.

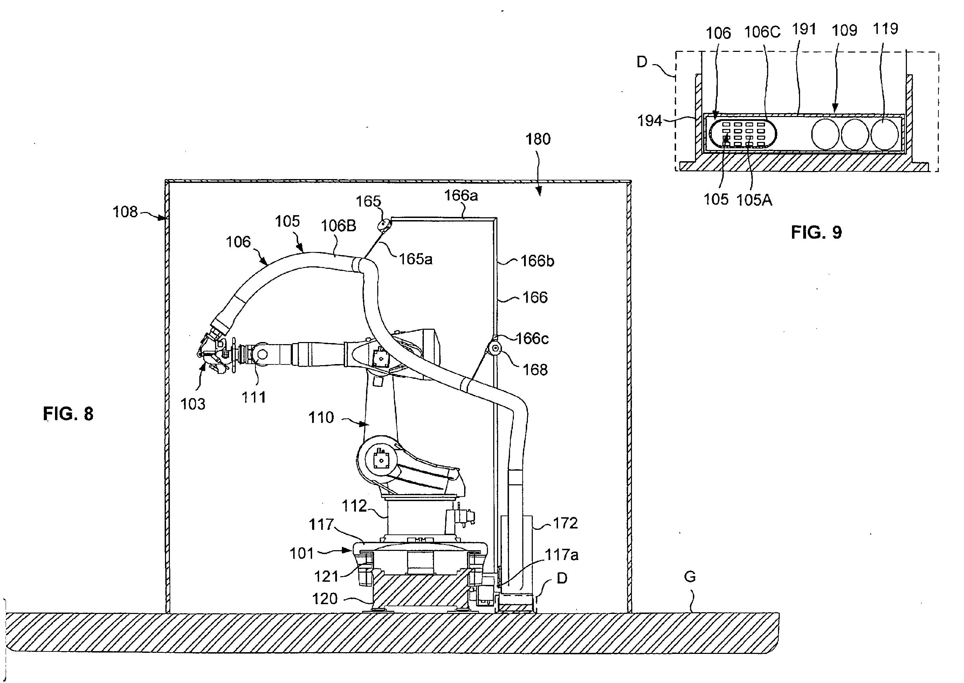

Les tubes flexibles placés dans la gaine sont fixés à un système de fixation amont placés en sortie du premier système limiteur de tension. La gaine passe dans le manchon disposé en partie inférieure de la paroi transversale. Dans l'enceinte, en sortie de manchon, la gaine est placée dans une chaîne porte-câbles 109, disposée le long de l'axe linéaire. La chaîne porte-câbles, connue en soi, est formée d'un ensemble de maillons creux articulés les uns aux autres, dans lesquels est logée la gaine, et comprend une extrémité 109a, dite fixe, assemblée ici au manchon et une extrémité 109b, dite mobile, assemblée ici à un support latéral 117a (Fig. 8) solidaire du chariot mobile 117. Dans le présent mode de réalisation, les axes d'articulation des maillons sont disposés horizontalement. La chaîne porte-câbles comprend un premier brin 191, dit inférieur, de longueur variable comportant l'extrémité fixe 109a, ce brin inférieur est relié par une portion 193 coudée, sensiblement en forme de U couché, à un deuxième brin 192, dit supérieur, de longueur variable, comportant l'extrémité mobile. La chaîne porte-câbles est disposée dans une goulotte 194 de guidage posée au sol, parallèlement à l'axe linéaire. Le brin inférieur repose sur le fond de la goulotte, le brin 192supérieur étant disposé sur le brin 191 inférieur.

Dans le mode de réalisation illustré, le brin supérieur est fixé en extrémité à un deuxième système limiteur de tension 172 monté sur le support 117a latéral solidaire du chariot 117. En sortie du premier limiteur de tension, les fibres passent dans des premiers tronçons de tube flexible, dits premiers tubes, fixés par leur extrémité au premier limiteur de tension 171 et au second limiteur de tension 172 via des systèmes de fixation. En sortie du deuxième limiteur, les fibres passent dans des seconds tronçons de tube flexible, dits seconds tubes, fixés par leurs extrémités audit second système limiteur 172 et à la tête 103 de placement. La gaine présente une partie 106A amont à l'extérieur de l'enceinte, une partie intermédiaire 106C disposée dans l'enceinte dans la chaîne porte-câbles et une partie aval 106B disposée dans l'enceinte entre le second système limiteur 172 et la tête 103. La figure 9 illustre le brin 191 inférieur de la chaîne porte-câbles 109 placée dans la goulotte 194, et dans laquelle passe la partie intermédiaire 106C de la gaine 106, les premiers tronçons de tube 105A étant disposés dans le passage interne de cette portion intermédiaire de gaine.

La partie 106A amont et la partie 106C intermédiaire de la gaine peuvent être formées d'un même tronçon de gaine, ou de deux tronçons de gaine séparés, dont un premier tronçon amont de gaine fixé entre le premier système limiteur de tension 171 et le manchon 183, et un second tronçon fixé entre le manchon et le second système limiteur de tension. La partie aval 106B de la gaine est formée d'un tronçon de gaine séparée fixé entre le second limiteur de tension et la tête.

L'étanchéité lumineuse au niveau des tubes flexibles peut être garantie par la longueur et la géométrie des tubes flexibles.

Pour éviter que la portion 106B aval de la gaine ne gêne les déplacements de la tête et/ou ne vienne contre le moule, la machine comprend un système de récupération de mou, agissant sur la partie aval de ladite gaine de sorte qu'elle reste tendue en particulier au niveau du poignet du robot. En référence à la figure 8, ledit système de récupération de mou comprend un premier enrouleur 165 de câble automatique, monté sur la barre 166a supérieure horizontale d'une potence 166, et dont l'extrémité libre du câble 165a est fixée à la gaine. La potence est fixée par son montant 166b sur le support latéral 117a, la barre supérieure s'étendant perpendiculairement à l'axe linéaire, au-dessus du bras poly-articulé. Un second enrouleur 168 automatique est par exemple monté sur une barre 166c intermédiaire horizontale de la potence qui est disposée sous la barre supérieure, perpendiculairement à l'axe linéaire et dont l'extrémité libre du câble est fixée à la gaine.

Tel qu'illustré à la figure 9, les câbles électriques et/ou les conduits pneumatiques et/ou hydrauliques pour l'alimentation et la commande de la tête et du bras poly-articulé passent dans la chaîne porte-câbles 109, lesdits câbles et conduits sont regroupés dans un ou plusieurs tuyaux, représentés schématiquement sous la référence 119. A l'extrémité fixe de la chaîne porte-câbles, les câbles et/ou conduits traversent de manière sensiblement étanche la paroi de l'enceinte, par exemple en passant dans le même manchon que les tubes flexibles, pour leur connexion à l'unité de commande. A l'extrémité mobile de la chaîne porte-câbles, les câbles et/ou conduits sortent latéralement de la chaîne porte-câbles, avant le second système limiteur de tension, et une partie d'entre eux s'étendent le long du bras poly-articulé dans des tuyaux (non représentés) jusqu'à la tête pour l'alimentation et la commande de cette dernière.

Selon un autre mode de réalisation, la tête de placement de fibres est montée sur un système de déplacement de type cartésien, notamment de type portique, avec un poignet d'extrémité, comprenant par exemple, tel que décrit dans le document brevet WO2010/049424, un premier chariot monté mobile selon une première direction horizontale entre deux poutres support parallèles surélevées d'un portique, un deuxième chariot monté mobile sur le premier chariot selon une deuxième direction horizontale perpendiculaire à la première, et un troisième chariot, appelé également coulant, monté mobile verticalement sur le deuxième chariot selon une troisième direction verticale. Le poignet, de type poignet de robot à trois axes, est monté pivotant à l'extrémité inférieure du troisième chariot autour d'un axe vertical de rotation. Le système de déplacement est placé dans une enceinte, et le cantre est disposé à l'extérieur de l'enceinte. Les tubes flexibles pour l'acheminement des fibres du cantre à la tête, éventuellement placés dans une gaine flexible, passent dans une première chaîne porte-câbles disposée horizontalement le long d'une poutre support surélevée du portique, l'extrémité fixe de la chaîne étant fixée à ladite poutre, son extrémité mobile étant fixée au premier chariot. Les tubes flexibles passent ensuite dans une deuxième chaîne porte-câbles disposée horizontalement le long du premier chariot, l'extrémité fixe de la chaine étant fixée audit premier chariot, et son extrémité mobile étant fixé au deuxième chariot.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Machine d'application de fibres comprenant
- une tête (3, 103) d'application de fibres (F) comprenant un rouleau (31) d'application et des moyens de guidage des fibres sur ledit rouleau d'application,
- un système (1, 101) de déplacement pour déplacer ladite tête d'application de fibres,
- des moyens (4, 104) de stockage de fibres, et
- des moyens (5, 105) d'acheminement des fibres pour acheminer les fibres desdits moyens de stockage vers la tête d'application, **caractérisée en ce qu'**elle comprend un système (8, 108) de sécurité comprenant au moins une barrière (81, 181) périmétrique, formée d'une paroi (81, 181) latérale, définissant une zone (80, 180) de sécurité dans laquelle est placé le système (1, 101) de déplacement portant la tête d'application, les moyens (4, 104) de stockage étant disposés à l'extérieur de ladite zone de sécurité, ledit système de sécurité formant une enceinte (8, 108) de protection, comprenant ladite paroi (81, 181) latérale, et une paroi (82, 182) supérieure,
ladite tête (3, 103) d'application de fibres comprend un système (32) de chauffage de type laser, ladite enceinte (8, 108) de protection formant un écran au rayonnement émis par le système de chauffage.

2. Machine selon la revendication1, **caractérisée en ce que** les moyens (5, 105) d'acheminement sont aptes à acheminer les fibres des moyens de stockage vers la tête d'application en faisant passer lesdites fibres par une ouverture (84, 184) d'une paroi de l'enceinte de manière sensiblement étanche au rayonnement lumineux.

3. Machine selon la revendication 1 ou 2, **caractérisée en ce que** les moyens (4, 104) de stockage reposent de manière fixe sur le sol, lors des opérations de drapage, lesdits moyens de stockage comprenant au moins un cantre (41, 141) pour recevoir des bobines de fibres.

4. Machine selon l'une des revendications 1 à 3, **caractérisée en ce que** lesdits moyens d'acheminement des fibres comprennent des tubes flexibles (5, 105), chaque tube flexible étant apte à recevoir une fibre (F) dans son passage interne.

5. Machine selon la revendication 4, **caractérisée en ce que** chaque tube comprend au moins un tronçon (5B) de tube s'étendant dans la zone de sécurité (80, 180) et connecté au niveau du système de sécurité (8) à un système (50, 150) de fixation.

6. Machine selon la revendication5, **caractérisée en ce que** ledit système de fixation (50, 150) est équipé d'un système d'étanchéité (56a, 56b ; 156a, 156b), garantissant une étanchéité entre les passages internes desdits tronçons de tube et l'extérieur du système de sécurité (8).

7. Machine selon l'une des revendications 1 à6, **caractérisée en ce que** les moyens (5, 105) d'acheminement des fibres sont placés dans le passage interne d'au moins une gaine (6, 106) tubulaire flexible.

8. Machine selon la revendication 7, **caractérisée en ce que** la machine comprend un système (65 ; 165, 168) de récupération de mou agissant sur la partie (6B, 106B) aval de la gaine (6, 106) placée dans la zone (80, 180) de protection.

9. Machine selon l'une des revendications 1 à 8, **caractérisée en ce que** le système de déplacement (101) comprend un axe linéaire (120) et un élément (110) de déplacement portant la tête (103) et monté mobile en translation sur ledit axe linéaire, ladite machine comprenant une chaîne porte-câbles (109) disposée parallèlement audit axe linéaire, dont l'extrémité (109b) mobile est assemblée audit élément de déplacement et dont l'extrémité (109a) fixe est assemblée en un point fixe par rapport audit axe linéaire, lesdits moyens (105) d'acheminement passant dans ladite chaîne porte-câbles.

10. Machine selon l'une des revendications 1 à 9, **caractérisée en ce que** le système (1, 101) de déplacement comprend un bras poly-articulé (10, 110).

11. Machine selon la revendication 10, **caractérisée en ce que** le bras poly-articulé (10, 110) est monté mobile par son embase (12, 112) sur un axe linéaire (120).

12. Machine selon les revendications 9 et 11, **caractérisée en ce que** la chaîne porte-câbles (109) est disposée parallèlement audit axe linéaire (120), et est assemblée par son extrémité (109b) mobile à l'embase (112) du bras poly-articulé (110).

13. Machine selon l'une des revendications 1 à 12, **caractérisée en ce qu'**elle comprend en outre au moins un système limiteur de tension (172) entre la tête (103) d'application et les moyens (104) de stockage, pour exercer un effort de traction sur les fibres (F).

14. Machine selon l'une des revendications 1 à 13, **caractérisée en ce que** les moyens (4, 104) de stockage comprennent au moins un cantre (41, 141) pour recevoir des bobines de fibres, ladite machine comprenant un système de jonction apte à effectuer la jonction de l'extrémité de fin d'une première bobine de fibre et l'extrémité de début d'une deuxième bobine de fibre.

## Patentansprüche

1. Faserauftragmaschine, umfassend:
- einen Kopf (3, 103) zum Auftragen von Fasern (F), der eine Auftragwalze (31) und Mittel zum Führen der Fasern auf der Auftragwalze umfasst,
- eine Bewegungseinrichtung (1, 101), um den Faserauftragkopf zu bewegen,
- Mittel (4, 104) zum Lagern von Fasern, und
- Mittel (5, 105) zum Befördern der Fasern, um die Fasern von den Lagermitteln zum Auftragkopf zu befördern,
**dadurch gekennzeichnet, dass** sie eine Sicherheitseinrichtung (8, 108) umfasst, die mindestens eine perimetrische Sperre (81, 181) umfasst, die aus einer Seitenwand (81, 181) gebildet wird, die eine Sicherheitszone (80, 180) definiert, in der die Bewegungseinrichtung (1, 101), die den Auftragkopf trägt, angeordnet ist, wobei die Lagermittel (4, 104) außerhalb der Sicherheitszone angeordnet sind, wobei das Sicherheitssystem eine Schutzeinfassung (8, 108) bildet, welche die Seitenwand (81, 181) und eine obere Wand (82, 182) umfasst,
der Faserauftragkopf (3, 103) eine Heizeinrichtung (32) nach Art eines Lasers umfasst, wobei die Schutzeinfassung (8, 108) eine Abschirmung gegen die Strahlung bildet, die von der Heizeinrichtung emittiert wird.

2. Maschine nach Anspruch 1, **dadurch gekennzeichnet, dass** die Beförderungsmittel (5, 105) in der Lage sind, die Fasern von den Lagermitteln zu dem Auftragkopf zu befördern, indem sie die Fasern durch eine Öffnung (84, 184) einer Wand der Einfassung auf im Wesentlichen gegen die Lichtstrahlung abgedichtete Art und Weise geben.

3. Maschine nach Anspruch 1 oder 2, **dadurch gekennzeichnet, dass** die Lagermittel (4, 104) bei Raffvorgängen fest auf dem Boden liegen, wobei die Lagermittel mindestens ein Spulengatter (41, 141) umfassen, um Faserspulen aufzunehmen.

4. Maschine nach einem der Ansprüche 1 bis 3, **dadurch gekennzeichnet, dass** die Mittel zum Befördern der Fasern flexible Schläuche (5, 105) umfassen, wobei jeder flexible Schlauch geeignet ist, um eine Faser (F) in seinem inneren Durchgang aufzunehmen.

5. Maschine nach Anspruch 4, **dadurch gekennzeichnet, dass** jeder flexible Schlauch mindestens ein Schlauchstück (5B) umfasst, das sich in der Sicherheitszone (80, 180) erstreckt und an der Sicherheitseinrichtung (8) mit einer Befestigungseinrichtung (50, 150) verbunden ist.

6. Maschine nach Anspruch 5, **dadurch gekennzeichnet, dass** die Befestigungseinrichtung (50, 150) mit einer Dichteinrichtung (56a, 56b, 156a, 156b) ausgestattet ist, die eine Abdichtung zwischen den internen Durchgängen der Schlauchstücke und dem Äußeren der Sicherheitseinrichtung (8) gewährleisten.

7. Maschine nach einem der Ansprüche 1 bis 6, **dadurch gekennzeichnet, dass** die Mittel (5, 105) zum Befördern der Fasern in dem internen Durchgang mindestens eines flexiblen röhrenförmigen Hüllrohrs (6, 106) angeordnet sind.

8. Maschine nach Anspruch 7, **dadurch gekennzeichnet, dass** die Maschine eine Einrichtung (65; 165, 168) zum Abfangen der Lose umfasst, die auf den nachgeschalteten Teil (6B, 106B) des Hüllrohrs (6, 106) einwirkt, das in der Schutzzone (80, 180) angeordnet ist.

9. Maschine nach einem der Ansprüche 1 bis 8, **dadurch gekennzeichnet, dass** die Bewegungseinrichtung. (101) eine lineare Achse (120) und ein Bewegungselement (110) umfasst, das den Kopf (103) trägt und translationsmäßig beweglich auf der linearen Achse gelagert ist, wobei die Maschine eine Energieführung (109) umfasst, die parallel zu der linearen Achse angeordnet ist, deren bewegliches Ende (109b) mit dem Bewegungselement zusammengefügt ist und deren feststehendes Ende (109a) an einem Punkt zusammengefügt ist, der im Verhältnis zu der linearen Achse feststehend ist, wobei die Beförderungsmittel (105) durch die Energieführung gehen.

10. Maschine nach einem der Ansprüche 1 bis 9, **dadurch gekennzeichnet, dass** die Bewegungseinrichtung (1, 101) einen Mehrgelenkarm (10, 110) umfasst.

11. Maschine nach Anspruch 10, **dadurch gekennzeichnet, dass** der Mehrgelenkarm (10, 110) über seinen Sockel (12, 112) auf einer linearen Achse (120) beweglich gelagert ist.

12. Maschine nach Anspruch 9 und 11, **dadurch gekennzeichnet, dass** die Energieführung (109) parallel zu der linearen Achse (120) angeordnet ist und über ihr bewegliches Ende mit dem Sockel (112) des Mehrgelenkarms (110) zusammengefügt ist.

13. Maschine nach einem der Ansprüche 1 bis 12, **dadurch gekennzeichnet, dass** sie ferner mindestens eine Spannungsbegrenzungseinrichtung (172) zwischen dem Auftragkopf (103) und den Lagermitteln (104) umfasst, um eine Zugspannung auf die Fasern (F) auszuüben.

14. Maschine nach einem der Ansprüche 1 bis 13, **dadurch gekennzeichnet, dass** die Lagermittel (4, 104) mindestens ein Spulengatter (41, 141) umfassen, um die Faserspulen aufzunehmen, wobei die Maschine eine Verbindungseinrichtung umfasst, die geeignet ist, um die Verbindung des Abschlussendes einer ersten Faserspule und des Anfangsendes einer zweiten Faserspule auszuführen.

## Claims

1. Fiber application machine comprising
- a fiber (F) application head (3, 103) comprising an application roller (31) and means for guiding fibers on said application roller,
- a displacing system (1, 101) to displace said fiber application head,
- fiber storing means (4, 104), and
- fiber conveying means (5, 105) to convey the fibers from said storing means to the application head,
**characterized in that** it comprises a safety system (8, 108) comprising at least one perimeter barrier (81, 181), formed from a lateral wall (81, 181), defining a safety zone (80, 180) wherein the displacing system (1, 101) carrying the application head is placed, the storing means (4, 104) being arranged outside of said safety zone, said safety system forming a protective enclosure (8, 108), comprising said lateral wall (81, 181), and an upper wall (82, 182),
said fiber application head (3, 103) comprises a heating system (32) of the laser type, said protective enclosure (8, 108) forming a screen to the radiation emitted by the heating system.

2. Machine according to claim 1, **characterized in that** the conveying means (5, 105) are able to convey the fibers from the storing means to the application head by passing said fibers through an opening (84, 184) of a wall of the enclosure in a substantially light radiation-tight manner.

3. Machine according to claim 1 or 2, **characterized in that** the storing means (4, 104) rest in a fixed manner on the ground, during layup operations, said storing means comprising at least one creel (41, 141) for receiving fiber spools.

4. Machine according to one of claims 1 to 3, **characterized in that** said fiber conveying means include flexible tubes (5, 105), each flexible tube being able to receive a fiber (F) in its internal passage.

5. Machine according to claim 4, **characterized in that** each tube comprises at least one tube segment (5B) extending in the safety zone (80, 180) and connected at the level of the safety system (8) to a fixing system (50, 150).

6. Machine according to claim 5, **characterized in that** said fixing system (50, 150) is provided with a tightness system (56a, 56b; 156a, 156b), guaranteeing a tightness between the internal passages of said tube segments and the outside of the safety system (8).

7. Machine according to one of claims 1 to 6, **characterized in that** the fiber conveying means (5, 105) are placed in the internal passage of at least one flexible tubular sheath (6, 106).

8. Machine according to claim 7, **characterized in that** the machine comprises a slack recovery system (65; 165, 168) acting on the downstream portion (6B, 106B) of the sheath (6, 106) placed in the protective zone (80, 180).

9. Machine according to one of claims 1 to 8, **characterized in that** the displacing system (101) comprises a linear axis (120) and a displacement member (110) carrying the head (103) and mounted mobile in translation on said linear axis, said machine comprising a cable carrier chain (109) arranged parallel to said linear axis, of which the mobile end (109b) is assembled to said displacement member and of which the fixed end (109a) is assembled at a fixed point with respect to said linear axis, said conveying means (105) passing through said cable carrier chain.

10. Machine according to one of claims 1 to 9, **characterized in that** the displacing system (1, 101) comprises a poly-articulated arm (10, 110).

11. Machine according to claim 10, **characterized in that** the poly-articulated arm (10, 110) is mounted mobile by its base (12, 112) on a linear axis (120).

12. Machine according to claims 9 and 11, **characterized in that** the cable carrier chain (109) is arranged parallel to said linear axis (120), and is assembled by its mobile end (109b) to the base (112) of the poly-articulated arm (110).

13. Machine according to one of claims 1 to 12, **characterized in that** it further comprises at least one tension limiting system (172) between the application head (103) and the storing means (104), to exert a traction force on the fibers (F).

14. Machine according to one of claims 1 to 13, **characterized in that** the storing means (4, 104) comprise at least one creel (41, 141) for receiving fiber spools, said machine comprising a joining system able to carry out the junction of the final end of a first fiber spool and the starting end of a second fiber spool.
